(19) Europäisches Patentamt
European Patent Office
Office européen des brevets

(11) Publication number: 0 166 466
B1

(12) EUROPEAN PATENT SPECIFICATION

(45) Date of publication of patent specification: 05.08.87

(51) Int. Cl.$^4$: G 06 F 15/18

(21) Application number: 85200472.0

(22) Date of filing: 29.03.85

# (54) Intelligent processor/memory elements and systems.

(30) Priority: 29.03.84 NL 8400984

(43) Date of publication of application:
02.01.86 Bulletin 86/01

(45) Publication of the grant of the patent:
05.08.87 Bulletin 87/32

(84) Designated Contracting States:
AT BE CH DE FR GB IT LI LU NL SE

(56) References cited:
DE-A-2 903 413

AUTOMATIC AND REMOTE CONTROL, PROCEEDINGS OF 2nd IFAC Congres, 1963, London, GB, pages 497-502, Butterworths; J.H. ANDREAE: "STELLA: a scheme for a learning machine"

L'ELECTRICITE ELECTRONIQUE MODERNE, vol. 42, no. 265, June-July 1972, pages 21-25, Paris, FR; B.H. MARTIN: "Le neurone cybernétique"

(73) Proprietor: Stern, August
V. Nyenrodeweg 912
NL-1081 BK Amsterdam (NL)

(73) Proprietor: Stern, Victor
Aster 10
NL-2925 EE Krimpen a/d IJssel (NL)

(72) Inventor: Stern, August
V. Nyenrodeweg 912
NL-1081 BK Amsterdam (NL)
Inventor: Stern, Victor
Aster 10
NL-2925 EE Krimpen a/d IJssel (NL)

(74) Representative: Altenburg, Udo, Dipl.-Phys. et al
Patent- und Rechtsanwälte Bardehle-Pagenberg-Dost-Altenburg-Frohwitter & Partner
Postfach 86 06 20
D-8000 München 86 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 166 466 B1

Courier Press, Leamington Spa, England.

(56) References cited:
PROCEEDINGS 9th ANNUAL SYMPOSIUM ON COMPUTER ARCHITECTURE, Austin 26-29 April, 1982, Pages 50-59, IEEE, New York, US; M.A. FRANKLIN et al.: "Asynchronous and clocked control structures for VLSI based interconnection networks"

PROCEEDINGS 2nd ROCKY MOUNTAIN SYMPOSIUM ON MICROCOMPUTERS: SYSTEMS, SOFTWARE, ARCHITECTURE, 27-30 August, 1978, Colorado, US, pages 51-60, IEEE, New York, US; R. CHATTERGY: "Design of synchronous parallel processors with chip-slices"

COMPUTER, vol. 8, no. 11, November 1975, pages 25-32, Long Beach, US; R.M. LEA: "Information processing with an associative parallel processor"

REPORT No. 29.11.82.375, Laboratory for Experimental Psychology, University of Amsterdam, 1982, pages 5-31; A. STERN: "Foundations of intelligence code"

**Description**

The invention relates to an elementary component-cell of a system and to a system composed of said elementary component-cells for storage and/or processing of information in numerical and/or symbolic forms comprising n positions and a plurality of inputs for common control of and energy supply to said positions, wherein each position comprises a channel input for a K-nary code flow where K≥2, a Q-nary memory element, where Q≥2 and K≥Q, a channel output for a K-nary code flow, a first K-nary logic switch means having its input connected to said channel input and its output to an input of said Q-nary memory element, and a second K-nary logic switch means having an input connected to an output of said Q-nary memory element and an output connected to said channel output.

A superficially similar elementary component-cell is known in the art as a storage means for operations in a processor to store a byte of binary information. An operation on a thus stored byte is executed by superposing a subsequent byte for example, whereby the present states of the binary memory elements are updated in accordance with the rules of an addition modulo 2.

A superficially similar system is known in the art as a processing means for high-performance multiple computation in systolic fashion. In a systolic system binary data flow from the memory through a network of processing elementary components and the results return to the memory.

It is an object of the present invention to provide an elementary component that is universal in the sense of system independence.

This object is achieved by the invention claimed in claim 1. Advantageously the functional capacity of the elementary component-cell is extended.

Furthermore, in addition to its storage function an elementary component-cell is provided with a processing function which is unified in terms of space and code whereby the present states of the Q-nary memory elements are updated in accordance with the rules of an unitary operator of multiplicative type.

Also a system for storage and/or processing of information in numerical and/or symbolic forms is provided comprising interconnected and cooperating elementary component-cells of the invention to unify both a storage function and a processing function of a system.

Advantageously the invention provides a self-controlled system of storage and/or processing of information in numerical and/or symbolic forms by avoiding memory and/or time conflicts.

A system is provided having a specially distributed I/O function in T channels, where T≥1.

Further the system is enabled to perform sequential or parallel processing of information in accordance with the type of program to be executed.

Another advantage is that a system for an optimal realization of an interconnection network is provided which performs a minimal amount of processing at each step of execution and carries out minimal-switch routing.

It is still another advantage of the invention to provide a system which can detect its own state, i.e., can be triggered to process the existing state of the memory without any input simply by uniform impulse, meaning that the system has an intelligence in a sense of the autodetection criterion.

Furthermore a system for realization of an interconnection network with a Möbius type of topology is provided meaning that the system has an intelligence in a sense of realizing the Principle of Nature Parallellism.

According to one aspect of the invention the elementary component-cell as defined above has the ability to conserve a unit of information in the short-term (S-) mode and/or in the long-term (L-) mode, where the said S-mode conserving a unit of information in the form of a n-codeword $a_k$ and the said L-mode conserving the same unit of information in the form of the complementary n-code word $\bar{a}_k$, where $a_k$ and $\bar{a}_k$ belong to the same $(m_1, m_2, \ldots, m_i, \ldots, m_{Q-1})$-out-of-n] code and $m_i$ being the number of the position occupied by the i-th character of a Q-nary alphabet, where $m_i=n/Q$, wherein the said second K-nary logic-switch means comprises W feedback inputs, where W = K—Q, for connection to the outputs of the Q-nary memory elements at the corresponding positions in W subsequent elementary components, wherein a unified processor-memory functioning is defined by successive processes of absorption and emission, the said first K-nary logic switch means evaluating a K-nary code information unit from the said input channel and causing a K-nary logical proposition comprising the evaluated K-nary code information unit and the state of the associated Q-nary memory element at corresponding position to select a unique state of the associated Q-nary memory element at corresponding position according to a logical table 'absorption', the said second K-nary logic switch means assigning a unique K-nary code information unit for the said output channel according to the logical table 'emission' with respect to the state and to the memory mode of the associated Q-nary memory element at corresponding position and W states of feedback output from Q-nary memory elements at corresponding positions in W subsequent elementary components, wherein if at some position channel input is lacking this can be considered as a special input value, wherein the said feedback inputs insure preservation of a said $[(m_1, m_2, \ldots, m_i, \ldots, m_{Q-1})$-out-of-n] code for n-codewords presented in parallel, wherein the elementary component can be controlled by changing two from three processing modes by a first common control signal, namely from a 'passive' processing mode to a 'stand-by' processing mode and from a 'stand-by' processing mode to a 'passive' processing mode, wherein said modes being a 'passive' processing mode preserving the actual state of each element, and a 'stand-by' processing mode enabling to perform the processing function by a

transition from the 'stand-by' processing mode to the 'active' processing mode as a result of absorption, and by a transition from the 'active' processing mode to the 'stand-by' processing mode to perform the processing and the storage functions if in L-mode and the storage function only if in S-mode as a result of emission, said 'passive' processing mode enabling free passage of K-nary information units from the said input channel and of W feedback outputs from Q-nary memory elements at corresponding position in W subsequent elementary components from the said output channel along the first K-nary logic switch means, the Q-nary memory element and the second K-nary logic switch means, as an operational selection option or as a reliability precaution measure, wherein the same first common control signal controls by means of a variable R the conversion of the said memory modes from S- to L-, frequency selective, the second common control signal controls by means of a variable F(q) conversions of the said memory modes from S- to L- and from L- to S-, selectively in accordance with address and/or current processing mode, wherein as a consequence of the said processor-memory unification the K-nary logic over a Q-nary alphabet or (K over Q)-logic being defined by:

1. K truth values and

2. the storage of the result of the evaluation of a K-nary logical proposition in a Q-nary form according to a probabilistic rule, wherein a Q-nary logical relaxation can be attained by restricting to Q out of K balanced truth values.

An elementary component of the invention is used in advantage to a finite network of identical elementary components for storage and/or processing of information in numerical (K=Q) and/or symbolic (K>Q) forms.

According to the invention a network or system of elementary component-cells represented by an (N×M)-matrix $A_{ij}$ (N<M), where $a_{ij}$ an elementary component-cell, is characterized by the following rule of transition of information

$$a_{ij} \rightarrow a_{i \overset{N}{\oplus} l, j \overset{M}{\oplus} l},$$

where the operations $\overset{N}{\oplus}$ and $\overset{M}{\oplus}$ being defined as an operation addition modulo N or M, respectively, for i = 0, N—1 and j = 0, M—1.

A network implementing transition according to such rule provides an optimal trajectory in the sense that neither queuing nor conflicts occur along such a trajectory, which goes through all elementary component-cells, sequentially or in parallel, without reiteration and the process returns to the starting position. A network as defined above represents a particular architecture of the system, i.e., a Möbius type of topology, which provides the possibility of realization the Principle of Natural Parallelism.

In particular the 'passive' processing mode of elementary component-cells is used for continuation of the storage and/or of the processing functions of the system once an elementary component-cell is down as a result of failure. That is a system consisting of elementary component-cells of the invention features a degree of reliability increasing with an increasing number of component-cells.

In a system of the invention T optimal parallel trajectories can be realized, where T is the greatest common factor of a given pair N, M. If M is increased while N is held fixed, the values of T vary periodically, with a period equal to N, between I and N through all common factors. Thus it is possible for any N to define some $M_0$ such that:

a. if $M = M_0$, then $T = N$, i.e., prallel trajectories;

b. if $M = M_0 + I$, then $T = I$, i.e., a sequential trajectory.

Thus a system of the invention appears to be an optimal realization of an interconnection network which performs a minimal amount of processing at each step of the execution, sequentially or in parallel, and carries out minimal-switch routing ith the options of identifying Input/Output with any elementary component (if T = I) or with any columm (if T>I) of matrix $A_{ij}$.

The system of the invention is in compliance with the non-linear criterion of an intelligent computing system, the autodetection criterion, which is formulated as the ability of a system to detect or measure the interaction of a system with itself, thus decoupling itself from the environment.

In the following the basis of the subject matter of the invention will be described as the '3 over 2' model [A. Stern and V. Stern, 1984]. In this description an elementary component is referred to as a P∩M-cell and a system consisting of P∩M-cells as a P∩M-medium. In addition, a description is given of an embodiment of a P∩M-cell and of a embodiment of a P∩M-medium as P∩M-network. The description refers to a drawing:

Figure 1 represents the system of 2 interconnected P∩M-cells;

Figure 2 is a diagram showing life history of a P∩M-cell with respect to memory and processing modes;

Figure 3 represents an oriented Dedekind structure;

Figure 4 is a representation of a P∩M-network;

Figure 5 shows in graphic form levels of memorization, which represent the controlled memory structure of the P∩M-medium;

Figure 6 shows in schematic form an embodiment of a P∩M-cell of the invention;

Figure 7 shows in schematic form an embodiment of a P∩M-network of the invention;

Figure 8 depicts an illustrative logic circuit for implementing the embodiment of Figure 6.

Figure 9 shows a block diagram of P∩M-cell interconnections as illustration of the embodiment of figure 1.

Figure 10 depicts a logic circuit implementation of the memory mode conversion control.

THE 3 OVER 2 MODEL

The basic principles of Intelligent Computing Systems are formulated as:

1. Distributivity and Möbius topological closure;
2. Inseparability of the memory cell from the processing operator;
3. Complementarity of memory modes.

The point of view taken is that, starting only from the principle of the inseparability of the memory cell from the processing operator, which is taken to be a necessary condition for the system to be intelligent, in some sense, we can define the basic functions of a computing system — the basic operation, the system logic and the storage of information. All three are carried out by the universal elementary component which has two stable states. In the basic operation the two states represent the binary alphabet of the operational code. In the evaluation of ternary logical propositions, as functions with variables the values of which form a continuum on the boolean interval [0, 1], these two states represent "false" and "true", as pure complementary values, while a coherent superposition of them represents "undetermined". The results of basic and logical operations are stored distributively in a system of elementary components that occupy one of two states, where in the "undetermined" case one of them is chosen probabilistically. A Möbius topological type network appears to be an optimal realization of an interconnection network which performs a minimal amount of processing at each step of the execution, sequentially or in parallel, carries out minimal-switch routing and provides a degree of reliability that increases with an increasing number of elementary components. Together with the controllable memory structure it ensures the satisfaction of sufficient conditions for the system to be intelligent, as:

1. Autodetection criterion and
2. The Natural Parallelism.

We believe that the chief value of the resulting specification of the system as a Basic Machine would be not only substantial advance in computational power and technical characteristics, but the formation of the basis for the generation of an Intelligent Computing System.

1. Introduction

The overall speed of processing and the storage capacity of information has increased by several orders of magnitude over the past decades, primarily because of revolutionary developments in hardware technology. The resulting high level of performance has extended the solvability of computational problems, but as far as software is concerned progress has been much less striking. It has become apparent that any further substantial increse in computational power can be achieved only by fundamental developments in system architecture and system logic. The present state of the art has stimulated attention towards the use of parallelism in the interconnection of processing and memory units into a system in which the soft/hardware distinction becomes vague [E. Dijkstra, 1968]. As a result, a number of different architectures for parallel computing systems have emerged with different advantages and limitations. All of them are based on some concept of how computation is to proceed and how components are to interact. In the hope of getting around the Von Neumann bottleneck both coarse-grained and fine-grained parallel architectures with a software trend towards distributed and logic programming are presently under research and development [H. Kung, 1982]. Our main concept is the Principle of Natural Parallelism, which is formulated as follows:

Any real process can be described as a system of cooperating and communicating processes which occur simultaneously in some space.

This space need not necessarily be continuous and infinite; it can be discrete and finite, but some notion of a direct neighbourhood of each element is indispensable. The real and not so trivial problem consists of how to formulate this concept constructively, as a computing system of universal form, so that any phenomenon which is of interest can be inserted into it as an information-processing model.

This way of formulating the problem has many attractive possibilities, but also indicates some new obstacles. It implies the need to develop a system of concepts in which any natural interaction can be described as information processing in a distributed computing medium and vice-versa, ie.e. an interacting element of a space is regarded as a universal microcell-multipolar which performs information processing [A. Ershov, 1969].

Evidently, if a sufficient supply of computational power is available — so that each element of the space corresponds to a separate element of the computing medium — then control and realization of a computational process are simplified to the tuning and triggering of the corresponding medium. Since the medium reproduces a described phenomenon "one to one" there is no need at all for any processing organization. If the process under consideration consists of even only one element more than the available number of elements of the medium, then complicated problems arise, related to the taking into account of boundary effect and the dynamic returning of the medium. The constructive resolution of these problems would lead to a successful embodiment of the very promising properties of Natural Parallelism.

2. The Model Description

Following the formalism of Programming Theory we introduce the concept of *the program* as a set of information-operational objects. Let us state a universal algorithm. The process which is realized by applying it to a program is termed *the execution* of the program. Execution of the program can be seen as a process which flows through time and can be represented as a finite sequence of information-processing steps, taking place instantaneously at successive, discrete intervals of time. There always exists a conclusive event, the occurrence of which signifies that execution of the program is finished and makes it possible to declare some object to be the result of the execution. With any particular program, therefore, we can associate a function which is computed or realized by the program. The arguments of this function are the input data of the program, and the value of the function for given arguments is the result of the program with the corresponding input data. Conceptually, execution of the program consists of two main parts: informational and operational; i.e. it can be broken down into processing units which act on units of information. Suppose that there exists a structure which defines a system of control and information relations between these two classes of objects: the processing units *operators,* which are applied selectively to the units of information, *memory cells.* If such a structure can guarantee execution of a certain class of programs, then we term it *a computing system or medium.*

2.1. The Processor-Memory cell.

Let us introduce a computing medium as a homogeneous, in some sense, discrete and finite space A, to each element of which there corresponds an elementary cell $a_{ij}$ ($i = 0, N—1$; $j = 0, M—1$), connected into an interconnection network. We assign to the elementary cell the following dual function:

I Informational — the conservation of some unit of information;

II Operational — the performance of some unit of action in the processing of the conserved unit of information.

This dual functioning expresses a basic principle of such a computing medium — the principle of the inseparability of an elementary memory cell from an elementary processing operator. Supposing that such an elementary cell is universal in the sense of system independence, we call it *the Processor∩Memory (P∩M)-cell* and refer to such a computing medium as a *P∩M-medium,* where sign ∩ is used to underline the unification of the abovementioned dual functioning.

The information property of the P∩M-ell $a_{ij}$ consists in the ability to conserve a unit of information $\alpha_{ij}$ on the address $a_{ij}$ in the form of an n-word $a_k = (a_1, a_2, \ldots, a_n)$ in some block code over the alphabet $F = \{0,1\}$, which represents the unit of information introduced above.

Consider in the set of codewords $G = \{a_k\}$ the complementary element $\bar{a}_k$ to each element $a_k$. We can define two *memory modes* of the P∩M-cell as follows:

1. Short-term (S-)mode — the unit of information $\alpha_{ij}$ is conserved in the form of the n-codeword $a_k$;

2. Long-term (L-)mode — the unit of information $\alpha_{ij}$ is conserved in the form of the n-codeword $\bar{a}_k$.

Those two modes are convertible as follows:

— a. from S- to L-mode by internal or external means;

— b. from L- to S-mode by external means only.

Let us define on the set G the binary operations ($\nabla$ and $\triangle$) which represent the unit of processing introduced above, such that any program of a set P can be represented as a finite associative sequence of such operations. We shall refer to those operations as the *basic operation.* Then a P∩M-cell can be considered to be an n-polar with the following operational properties:

1. Reception of the n-codeword Y from communication channel;

2. Execution of the basic operation $\nabla$ over the conserved n-codeword X and the received n-codeword Y;

3. Depending on the memory mode:

— a. if in the S-mode, then the storage in itself of the result of the basic operation $\nabla$ in the form of the n-codeword $Z_S$;

— b. if in the L-mode, then the execution of the basic operation $\triangle$ over the obtained n-codeword $Z_S$ and the conserved n-codeword X, and the maintenance of the conserved n-codeword X;

4. Transmission into the communication channel of the n-codeword $Z_S$ or $Z_L$, where $Z_S$ and $Z_L$ are results of the basic operations with respect to the S- or the L-memory mode, respectively, and X, Y, $Z_S$ and $Z_L \in G$.

It seems logical to assume that the P∩M-cell with these operational properties processes and conserves the information in a single code. Such a universal operational code should, if possible, possess the following properties: be convenient for performing the basic operations and be optimal for conservation of information.

If we suppose that the communication channel is an error-protected one, then an attractive candidate for the universal operational code is an arithmetic code with constant weight m, i.e., *a (m-out-of-n)code.* The power of the set G in this case would be:

$$N^m_n = \frac{1}{2}\,\frac{n!}{m!\,(n—m)!}$$

The density of conservation of information for a given n is maximum if the code weight m is equal to half of the length of an n-codeword, since

$$N_n = \max_{1 \leq m < n} N_n^m = \frac{1}{2} \frac{n!}{n/2!n/2!}, \text{ where n is even.} \qquad (2.2)$$

Let the basic operations ($\nabla$ and $\triangle$) be positional operations such as

$$X \nabla Y = Z_S, \text{ with } Z_S = (f^1(x_1, y_1), f^2(x_2, y_2), \ldots, f^n(x_n, y_n))$$
$$Z_S \triangle X = Z_L, \text{ with } Z_L = (\phi^1(x_1, y_1), \phi^2(x_2, y_2), \ldots, \phi^n(x_n, y_n)) \qquad (2.3)$$

where: $f^i$, $\phi^i$ — switching functions on the i-th position.

The switching functions $f^i$ and $\phi^i$ may be defined in terms of *carrier-switches* and by assigning to them the ability to perform the following functions:

— to carry the n-codeword $Y = (y_1, y_2, \ldots, y_n)$ in the form of an information n-package through the communication channel;

— to realize the positional switching functions $f^i(x_i, y_i)$ and $\phi^i(x_i, y_i)$, $(i = 1, \ldots, n)$, where $X = (x_1, x_2, \ldots, x_n)$ is the n-codeword conserved in P∩M-cell.

In this case the operational properties of the P∩M-cell can be considered as successive processes of absorption and emission of an information package which consists of n carrier-switches. Let us introduce 3 tyres of carrier-switches: A, B and C, together with rules for their absorption and emission, as follows:

— absorption (emission) of carrier-switch type A leaves the position unmodified;

— absorption (emission) of carrier-switch type B modifies the position to "0" (to "1");

— absorption (emission) of carrier-switch type C modifies the position to "1" (to "0").

Then rules for emission only, subject to the condition that the memory be preserved, can be formulated as follows:

— a position associated with the value 0 can emit carrier-switches type A or C only;

— a position associated with the value 1 can emit carrier-switches type A or B only.

We now consider a system of two P∩M-cells $A_0$ and $A_1$, connected by a communication channel, in which are stored the n-codewords $\alpha_0$ and $\alpha_1$, respectively. Evidently, from the rules of emission formulated above, the n-package $\beta_0$, which corresponds to the n-codeword $\alpha_0$ and is emitted by the P∩M-cell $A_0$, can have maximum $N_0 = 2^n$ different combinations of carrier-switches. The P∩M-cell $A_1$ can absorb only those n-packages which switch the n-codeword $\alpha_1$ stored in it into a resulting n-codeword $\beta_1 = \alpha_1 * \beta_0$ in the same code, where * means the basic operations in general, i.e., there are only $N_n^m < N_0$ possibilities. In this case absorption of the n-package $\beta_0$ by the P∩M-cell $A_1$ can be guaranteed only by imposing, via feedback, some regulating condition, on the emission of the n-pacakge $\beta_0$ by the P∩M-cell $A_0$. Such an operational condition can be described functionally as a relation between the composition of the information n-package $\beta_k$ and the information stored in the P∩M-cells $A_k$ and $A_{k+1}$ at the moment of completion of the absorption of the information n-package $\beta_{k-1}$ (Figure 1). We can formulate this as a law of preservation of the code, as follows

$$C_k = D_\gamma(\alpha_{k+1}, \alpha_k)$$

where:

$C_k = (k_1^j, k_2^j, \ldots, k_n^j)$ — the composition of the k-th information n-package,

$k_i^j$ $(j = 1,3)$ — the carrier-switch of the j-th type in the i-th position,

$D_\gamma(\alpha_{k+1}, \alpha_k)$ — the operational difference between the n-codewords $\alpha_k$ and $\alpha_{k+1}$ in canonical representations [W. Peterson and E. Weldon, 1972]:

$$D_\gamma(\alpha_{k+1}, \alpha_k) = \sum_{i=0}^{n-1} d_{\gamma j} 2^i,$$

where $d_{\gamma j} \varepsilon \{0, -1, 1\}$ — the balanced ternary digit and the index $\gamma$ ($\gamma$=1,4) expresses the dependence on the memory mode combinations for a pair of P∩M-cells $A_0$ and $A_1$ such as (S,S), (S,L), (L,S) and (L,L).

If the values of $d_{\gamma j}$ are assigned as some kind of information charges to the carrier-switches A, B and C, respectively, such a relationship becomes evident.

The introduction of such operational properties leads us to the concept of *the processing mode* of the P∩M-cell. Let each P∩M-cell be in one of three processing modes: "passive", "stand-by", "active". We denote the processing modes of a P∩M-cell by a superscript l (l = 0, 1, 2) and define them by the rules of transition from one mode to another as follows:

$$a_{ij}^{l} \rightarrow a_{ij}^{l+1}\text{ , for } l = 0, 1$$

$$a_{ij}^{l} \rightarrow a_{ij}^{l-1}\text{ , for } l = 1, 2$$

These definitions of the processing modes and the rules of transition allow us to formulate the operational properties of a P∩M-cell with respect to the execution of a program:

— if $a_{ij}^{0} \rightarrow a_{ij}^{1}$, then the P∩M-cell is inserted into the program;
— if $a_{ij}^{1} \rightarrow a_{ij}^{0}$, then the P∩M-cell is removed from the program;
— if $a_{ij}^{1} \rightarrow a_{ij}^{2}$, then the P∩M-cell processes information in accordance with the basic operation ∇;
— if $a_{ij}^{2} \rightarrow a_{ij}^{1}$, then the P∩M-cell:
a. if in the S-mode, stores the result of the basic operation ∇ or
b. if in the L-mode, processes information in accordance with the basic operation △ and maintains the conserved information.

The cyclical transition $a_{ij}^{1} \rightarrow a_{ij}^{2}\, a_{ij}^{1}$, which corresponds to the processing-memorizing act, we term *the triggering* of a P∩M-cell. Since only a "stand-by" P∩M-cell can become "active", then in the P∩M-medium two types of processing of information can be distinguished:
— if a passive P∩M-cell receives the n-codeword $\beta_k$, then it sends out the same n-codeword $\beta_{k+1} = \beta_k$;
— if a stand-by P∩M-cell receives the n-codeword $\beta_k$, then it sends out the n-codeword $\beta_{k+1} = \alpha_{k+1} * \beta_k$, where $\alpha_{k+1}$ is the conserved n-codeword.

In this respect, failure of a P∩M-cell can be regarded as its being put irreversibly into the "passive" processing mode as a reliability precaution measure. Moreover, a degree of reliability increases with an increasing number of P∩M-cells in the system.

The conversion of the memory modes by internal means can be defined via processing modes as follows:
— if a P∩M-cell has been in "stand-by" and "active" processing modes for longer than some characteristic time $\Delta T$, then it converts from the S-mode to the L-mode, which is maintained until an external control signal is applied at time $\tau$.

The life history of a P∩M-cell can be represented as a time diagram of memory-processing modes (Figure 2).

The probability that a P∩M-cell will convert from the S-mode to the L-mode in a time interval $\Delta t$ can be expressed as follows:

$$P(a_{ij} : S \rightarrow L) = P(a_{ij} : S \rightarrow L \mid a_{ij}^{1,2})P(a_{ij}^{1,2}) =$$

$$= [\mu.\Delta t + o(\Delta t)].R = [\mu.R + f(q)]\Delta t$$

where:

$$\mu = \frac{1}{\Delta T} \text{ — the conversion coefficient,}$$

R ($0<R\leq 1$) — the relative time in "stand-by' and "active" processing modes and
f(q) — a term of second order in $\Delta t$, or higher.

$\mu$, R and f(q) can be regarded as control variables, each with its own influence on the probability introduced above.

2.2 The System Logic

Since the P∩M-cell is destined to be part of a computing medium, the system logic must be defined. The fact that we have introduced three types of carrier-switches as a consequence of the processor-memory unification, leads us to formulate the logic for the P∩M-medium as a ternary logic over the binary alphabet or *a (3 over 2)—logic* with the following types of truth values: "undetermined", "false" and "true" assigned to carrier-switches A, B and C, respectively. In this respect each position of a P∩M-cell can be seen as an oriented Dedekind structure on which this logic is built (Figure 3).

The orthogonal-complementary relationships between elements of this structure comply with the dual functioning requirement of the universal elementary cell introduced above. Let us assign a non-integer value between 0 and 1 to "undetermined", as a coherent superposition of the boolean values 0 ("false") and 1 ("true") [G. Birkoff and J. von Neumann, 1936]. This provides a basis for formulating all necessary logical functions for the P∩M-medium with variables the values of which form a continuum on the boolean interval [0,1] [L.A. Zadeh, 1965]. The result of the evaluation of a ternary logical proposition is stored in binary form according to the following probabilistic rule:

$$P(x) = \frac{1}{2} + (\mathrm{sgn}(\frac{1}{2} - x))(\frac{1}{2} - L)$$

where L the value of the logical variable and x ε F.

By restricting a system to carrier-switches type B and C only or to 2 out of 3 balanced truth values, the binary logical relaxation can be attained with the feedback device become irrelevant.

2.3 The Interconnection Network

Consider the execution of a program by a P∩M-medium. In the initial state of the memory all P∩M-cells are passive. In accordance with some particular program a subset $P_i$ of the set P of P∩M-cells is selected and inserted into the program by transition to the "stand-by" processing mode. The execution of the program is represented as a sequence consisting of triggering of the "stand-by" P∩M-cells and passage through the "passive" P∩M-cells of the set P. With such a sequence can be put in correspondence some information-logical trajectory in a space A. The existence of the "passive" P∩M-cells leads to the appearance of certain degrees of freedom, i.e., for a given program $P_i$ and for the same initial state of the memory, it is possible to realize some set of variants of the execution of the program by the P∩M-medium or some set of trajectories in the space A. Evidently, the result of execution does not depend on which variant is realized, and the choice of an optimal trajectory, in some sense, can be defined by a topological structure of the space A only. Since any program $P_i$ ε P consists of a finite associative sequence of basic operations, then an optimal trajectory would be one which goes through all the cells of the P∩M-medium sequentially or in parallel without reiteration. Consider an (N×M)-matrix $a_{ij}$ (N<M) which corresponds to a space A. Let us define on the sets of indices i, j (i = 0, N—1; j = 0, M—1) an operation addition modulo N or M, respectively, as

$$X \overset{P}{\oplus} Y = Z$$

where Z is a remainder of the quotient

$$\frac{X+Y,}{P}$$

$0 \leq Z \leq P-1$ and P is equal to N or M.

Let us define the concept of *the direct neighbourhood* of $a_{ij}$ ε A as follows:

The direct neighbourhood of the element $a_{ij}$ consists of the elements

$$a_{i\underset{\oplus}{N}1,j},\ a_{i,j\underset{\oplus}{M}1} \text{ and } a_{i\underset{\oplus}{N}1,j\underset{\oplus}{M}1}.$$

Let us permit in the space A only those trajectories which consist of transitions following the rule:

$$a_{ij} \rightarrow a_{i\underset{\oplus}{N}1,j\underset{\oplus}{M}1},$$

so forbidding transitions in the two orthogonal directions such as:

$$a_{ij} \rightarrow a_{i\underset{\oplus}{N}1,j} \text{ or } a_{ij} \rightarrow a_{i,j\underset{\oplus}{M}1}$$

The introduction of such a rule, governing the transition from one P∩M-cell to another, as a step in the execution of a program fixes some interconnection network in the P∩M-medium as a topological structure, in some sense, of the space A. Such *a P∩M-network* can realize the optimal trajectory described above and may be considered as a special type of architecture.

Group-theoretical considerations imply that, depending on the values of N and M, a P∩M-network can realize T optimal parallel trajectories, where T is the highest common factor of each given pair N, M. If M. is increased while N is held fixed, the value of T varies periodically, with a period equal to N, between 1 and N through all common factors. Therefore it is possible for any N to define some $M_0$ so that:

— a. if M = $M_0$, then T = N, i.e., parallel trajectories,

— b. if M = $M_0$ + 1, then T = 1, i.e., a sequential trajectory.

This opens up the possibility of dynamic switching between sequential and parallel processing as an algorithmic flexibility option. The condition that a P∩M-medium has a homogeneous network structure can be satisfied if in addition to the P∩M-cells $a_{ij}$ introduced above we admit the existence of two types of degenerate cells $b_{ij}$ and $c_{kj}$. Such b- and c-cells have the same fundamental nature as a-cells, but cannot conserve or process information. They are used (Figure 4):

— a. cells $b_{ij}$ — to prevent the routing of information in the two orthogonal directions;

— b. cells $c_{kj}$ — to realize the dynamic switching between sequential and parallel processing (solid arrows represent sequential routing; dashed arrows represent parallel routing).

By identifying the elements $a_{ij}$, $b_{ij}$ and $c_{kj}$ of the first row (i,k=0) with those of the last row (i,k=N—1), and the elements $a_{ij}$, $b_{ij}$ of the first column (j=0) with those of the last column (j=M—1), we obtain a P∩M-network with a Möbius type of topology [A. Stern, 1982]. The 2-dimensional cyclic shift interconnection pattern indicates that after N.M/T transitions from one P∩M-cell to another the process returns to the starting position. It makes a P∩M-network topologically and functionally equivalent to an iterated form of a Shuffle-Exchange interconnection network, with the possibility of identifying Input/Output with any element (if T=1), or any column (if T>1), of the matrix $a_{ij}$. This particular type of topology provides the possibility of constructing complicated 3-dimensional computing mediums consisting of multi-layered, equivalent, non-oriented topological structures with different functional assignments, which penetrate, are tangent to and bound one another.

For processing purposes the P∩M-network appears to be very powerful since it can be seen as an optimal realization of an interconnection network which performs a minimal amount of processing at each step of the execution of a program and carries out minimal-switch routing with no queuing or conflicts.

2.4. The Memory Structure

The result of the execution of a program $P_i$ ε P is represented simultaneously by:

1. Short-(S-)form, i.e., T information n-packages and
2. Long-(L-)form, i.e., the final state of the memory.

In the first case the result is output for immediate utilization; in the second it is conserved distributively over all P∩M-cells of a set $P_i$. The number of P∩M-cells that have converted from S-mode to L-mode during the execution of a program $P_i$, which corresponds to the degree of memorization, depends on the power of the set of P∩M-cells inserted into the program, or in other words on the execution time relative to the characteristic time of conversion $\Delta T$. If the execution time or the power of the set $P_i$ is small, then the degree of memorization is also small, and the final state of the memory will be destroyed by the execution of a subsequent program. One way to memorize the result of the execution of a program of this sort is to repeat the execution until a sufficient degree of memorization has been attained. However, it would clearly be preferable to be able to control the desired level of memorization in the L-form relative to the execution time of the particular problem. In general, the process of L-form memorization can be described as a probabilistic death process as follows:

$$H = H_0 e^{-[\mu R + f(q)]t}$$

where:

H — the number of P∩M-cells in the S-mode and

$H_0$ — the total number of P∩M-cells in the computing medium.

If we were to apply sinusoidal excitation in phase with the processing, the value of R would be 0.5 independent of the frequency. Let us call this a "working" memorization mode, which extends the average S-mode life-time as a simple realization of memory control. Together with the natural mode this mode clearly separates two possible regions of forced memorizing (Figure 5).

The S-forced memorization could be achieved by varying the control variable R in a more complicated way than sinusoidally. The L-forced memorization could be achieved by making the control variable f(q) dominate the process through some mechanism for internal triggering of the P∩M-cell by an external signal, applied in accordance with the corresponding address or processing mode. Conversion from L- to S-mode, which is equivalent to erasing the result of execution of some program, can be realized by the same external signal. By local application of L-forced memorization or non-application of S-forced memorization, for example by frequency filtering, local memorization of the results of the execution of a certain class of programs could be achieved.

3. Intelligent Computing Systems

The criteria for any system to be intelligent, in some sense, are usually stated in a framework either of projective or of attributive properties, or both. These approaches are basically linear and deal with the interaction of a system with the environment only. We have taken for the main criterion of intelligence the ability of a system to detect its own state — the autodetection criterion [A. Stern and V. Stern, 1973]. Such a clearly nonlinear approach directs attention to the unique property of intelligence, which is the detection or measuring of the interaction of a system with itself, thus decoupling itself from the environment. The P∩M-network can be triggered to process the existing state of the memory without any input simply by a uniform impulse. This can be considered as the execution of a special type of program, the result of which is characteristic of the state of the system, so satisfying the autodetection criterion. This directly links the problem of intelligence with the fundamental physical problem of measurement.

The advantages of parallelism in the interconnection of processing and memory units have become apparent. The principle of Natural Parallelism is very promising as a foundation for intelligent computing. Therefore the ability of the system to store and to process information in accordance with this principle can be considered as another criterion of intelligence. The functional properties of the P∩M-cell and a Möbius type of topology of the P∩M-system provide the possibility of realizing the Principle of Natural Parallelism.

Assuming that it satisfies the above criteria, the Intelligent Computing System is necessarily hardware oriented with numerical computation and symbolic manipulation being considerd as complementary modes of Left-Right intelligent processing [R. W. Sperry, 1961].

The technological realization of the embodiment of the P∩M-system can, as a consequence of its natural organisation, really promise miniaturization down to atomic-molecular level [A. Stern, 1982; R.G. Brewer and E.L. Hahn, 1984].

Moreover, storage and processing of information by such a system will be self-protected to a high degree against natural or artificial disturbances. The possibility of developing a molecular device computing system is proved to be feasable [F.L. Carter, 1984]. The proposed P∩M-system naturally fits for such realization and promises not only a substantial advance in computational power and technical characteristics, but the formation of new technology for the generation of Artificial Intelligence Systems.

Figure 6 shows in schematic form the Processor-∩-Memory(P∩M-) cell. The P∩M-cell 1 is connected to a transmisson medium 2 equally comprising n separate parallel and bidirectional channels from "I" to "n"', each carrying input information in ternary code G3:(A,B,C) and output information in binary code G2:(0,1). Transmission medium 2 is provided for interconnection of the P∩M-cell 1 with a preceding P∩M-cell (not shown). The P∩M-cell 1 is connected to a transmission medium 3 equally comprising n separate parallel and bidirectional channels from "I" to "n", each carrying output information in ternary code G3 and input information in binary code G2. Transmission medium 3 is provided for interconnection of P∩M-cell 1 with a succeeding P∩M-cell (not shown).

In the P∩M-cell 1 each of identical positions 4 is associated with a bidirectional channel in respective transmission mediums 2 and 3. Each position 4 comprises:

a receiver RT for ternary input, a ternary logic switch means SA with ternary output, a binary memory device 5 with binary outputs, a ternary logic switch means SE with binary input and ternary output, and a transmitter TT for ternary output.

Receiver RT and transmitter TT are interface means between position 4 and associated channels in the transmission mediums 2 and 3 respectively.

Logic switch means SA evaluates ternary input information units A, B or C for performing a basic operation $\nabla$ which is carried out in the associated memory device 5 according to the logical table ('absorption') with respect to the state of the memory device 5.

The state of memory device 5 is fed back (6) through the binary output to the corresponding position in the P∩M-cell from which the ternary input information unit is received through the associated channel in the transmission medium 2.

Logic switch means SE assigns a unique ternary output information unit A, B or C to the result of a basic operation $\nabla$ or $\triangle$ according to the logical table ('emission') with respect to the state and to the memory mode of the associated memory device 5, and to the state of binary feedback input 7 from the memory device at the corresponding position in the P∩M-cell to which the ternary output information unit will be transmitted through the associated channel in the transmission medium 3.

The P∩M-cell 1 comprises an accumulating time means (not shown), generating an internal control signal, common for all memory elements, such that when the total time in the 'stand-by' and 'active' processing modes is equal to a predetermined time $\triangle T$, conversion from the S- to the L-memory mode takes place in accordance with the probabilistic rule.

External input signals 8, 9, 10 and 11 comprise:

— Common control input signal 8 controls the transition of processing modes (from 'passive' to 'stand-by' and from 'stand-by' to 'passive') directly and the conversion of memory modes (from S- to L-mode) indirectly by means of control variable R, frequency selective;

— Common control input signal 9 controls the conversion of memory modes (from S- to L-mode and from L- to S-mode) by means of control variable f(q) in accordance with address and/or current processing mode;

— Common control input signal 10 for write/read information in/from memory devices 5;

— Common input signal 11 for supplying the energy required for operation of the P∩M-cell.

Figure 7 shows in schematic form an embodiment of a P∩M-network of the invention. An interconnection network 70 comprises an array of P∩M-cells A interleaved with an array of insulating degenerate P∩M-cells b. One column of cells A is replaced by a column 71 of degenerate cells C, which are control means for realization of the dynamic switching between sequential and parallel processing. Adjacent to the column 71 of cells C the column 72 of cells b can be moved between positions $b^1$ and $b^2$, position $b^1$ in fact short circuiting each of the cells C with a cell A in the next column 73, resulting in a P∩M-network having N=4 rows and M=12 columns and thus being operative in 4 parallel processing trajectories. Position $b^2$ leaves the P∩M-network in a condition with N=4 rows and M=13 columns and thus being operative in one sequential processing trajectory.

An illustrative logic circuit implementation of the embodiment of Figure 6 is shown in Figure 8. For convenience, we assume that the ternary signals A, B, C are transmitted from one cell to another in the form of a signal change on one of three lines A, B, C, respectively. Such signal change could be a level transition, e.g. from high-to-low or from low-to-high, or a phase transition. We also assume that binary feedback signals on line 6 and 7 are encoded in a conventional high-low (or one-zero) binary code.

The ternary input signed A or B or C is resolved through receiver (RT) into two binary logic signals X and Y in accordance with table 1.

TABLE 1

| TRUTH TABLE | | | INPUT RECEIVER | |
|---|---|---|---|---|
| A | B | C | X | Y |
| 1 | 0 | 0 | 1 | 0 |
| 0 | 1 | 0 | 0 | 0 |
| 0 | 0 | 1 | 0 | 1 |

The binary signals X, Y then pass into Input Multiplexer (IM). The IM is a dual two to one multiplexer. Depending on the processing mode of the preceding P∩M-cell k—1, passive or stand-by (X,Y) inputs are chosen from the receiver or from bypass multiplexer of preceding P∩M-cell (figure 9). Outputs (X,Y) of IM are then passed to the Bypass Multiplexer (BM), which is a dual one to two multiplexer. Depending on the processing mode of the P∩M-cell k, passive of stand-by, the signals X,Y are either passed on to the Logic Memory (LM) or forwarded on to the IM of the succeeding P∩M-cell k+1.

Logic gates 100, 101, 102, 103, 104, 105, 106 and 107 perform the basic logic switch SA function. The D-type flip-flop 110 performs the binary memory function. Elements 120, 121, 122, 123 and 124 perform the basic logic switch function of SE.

The transfer function of the LM, which consists of the SA, binary memory device and SE logic, is described in table 2.

TABLE 2

| INPUT | | | S/L | MINIT | MFINAL | FEEDBACK | OUTPUT |
|---|---|---|---|---|---|---|---|
| A | B | C | | | | | |
| 1 | 0 | 0 | 0 | 0 | 0 | 0 | C |
| 1 | 0 | 0 | 0 | 1 | 1 | 0 | A |
| 0 | 1 | 0 | 0 | 0 | 0 | 0 | C |
| 0 | 1 | 0 | 0 | 1 | 0 | 0 | C |
| 0 | 0 | 1 | 0 | 0 | 1 | 0 | A |
| 0 | 0 | 1 | 0 | 1 | 1 | 0 | A |
| 1 | 0 | 0 | 0 | 0 | 0 | 1 | A |
| 1 | 0 | 0 | 0 | 1 | 1 | 1 | B |
| 0 | 1 | 0 | 0 | 0 | 0 | 1 | A |
| 0 | 1 | 0 | 0 | 1 | 0 | 1 | A |
| 0 | 0 | 1 | 0 | 0 | 1 | 1 | B |
| 0 | 0 | 1 | 0 | 1 | 1 | 1 | B |
| 1 | 0 | 0 | 1 | 0 | 0 | 0 | C |
| 1 | 0 | 0 | 1 | 1 | 1 | 0 | A |
| 0 | 1 | 0 | 1 | 0 | 0 | 0 | C |
| 0 | 1 | 0 | 1 | 1 | 1 | 0 | B |
| 0 | 0 | 1 | 1 | 0 | 0 | 0 | C |
| 0 | 0 | 1 | 1 | 1 | 1 | 0 | A |
| 1 | 0 | 0 | 1 | 0 | 0 | 1 | A |
| 1 | 0 | 0 | 1 | 1 | 1 | 1 | B |
| 0 | 1 | 0 | 1 | 0 | 0 | 1 | A |
| 0 | 1 | 0 | 1 | 1 | 1 | 1 | B |
| 0 | 0 | 1 | 1 | 0 | 0 | 1 | C |
| 0 | 0 | 1 | 1 | 1 | 1 | 1 | B |

The Feedback Bypass Multiplexer (FBM) is a fual one to two multiplexer and will either choose the information from the succeeding P∩M-cell k+1 for itself if the P∩M-cell k is in the stand-by processing mode and at the same time feeding its memory information to the preceding P∩M-cell k—1. If the P∩M-cell k is in the passive processing mode, then the feedback signal from the succeeding P∩M-cell k+1 directly passed to the preceding P∩M-cell k—1.

The output from the SE logic block to transmitter (TT) has the following transfer function described in table 3.

TABLE 3

| TRUTH TABLE | | | OUTPUT TRANSMITTER | | |
|---|---|---|---|---|---|
| X1 | Y1 | Z1 | A | B | C |
| 1 | 0 | 0 | 1 | 0 | 0 |
| 0 | 1 | 0 | 0 | 1 | 0 |
| 0 | 0 | 1 | 0 | 0 | 1 |

Logic elements 130, 131, 132 and 133 perform the function of complementing the stored data in the binary memory device whenever a conversion from S-memory mode to L-memory mode or from L-memory mode to S-memory mode occurs.

Logic element 132 has the following truth table:

TABLE 4

| CLOCK (CLK) | CLEAR | q |
|---|---|---|
| X | 0 | 0 |
| □ | 1 | 1 |

X — DON'T CARE
□ — TRANSITION

Logic elements 200, 201 and 202, shown in figure 10, perform the function of memory mode conversion, there the global operator control signal has the meaning of control variable f(q), and the clock control signal is locally generated by accumulating time means and globally has the meaning of control variable μ.

References

Birkhoff, G., and J. von Neumann, "The Logic of Quantum Mechanics", Annals of Mathematics, Vol. 37, pp. 823—843, 1936.

Brewer, R.G. and E.L. Hahn, "Atomic Memory", Scientific American, Vol. 251, No. 6, pp. 42—49, 1984.

Carter, F.L., "The Molecular Device Computer: Point of Departure for Large Scale Cellular Automats", Physica 10D, pp. 175—194, 1984.

Dijkstra, E.W., "Cooperating sequential processes", in: F. Genuys (ed.), Programming Languages, Acad. Press, New York, NY, pp. 43—112, 1968.

Ershov, A.P., "Parallel programming", Proc. IInd Allunion Conf. Homogeneous Computing Systems and Mediums, University of Moskow, 1969.

Kung, H.T., "Why Systolic Architectures?", Computer, Vol. 15, No. 1, pp. 37—46, 1982.

Peterson, W.W., and E.J. Weldon, "Error-correcting Codes", 2nd ed. MIT Press, Cambridge, pp. 449—463, 1972.

Sperry, R.W., "Ordered Functioning in Disordered Structures", Proc. Symposium on Self-Organization, University of Illinois, 1961.

Stern, A., and V. Stern, "Denken als quantenmechanischer Vorgang", J. Ideen des exakten Wissens, DVA, Stuttgart, No. 9, pp. 544—551, 1973.

Stern, A., "Möbius structure of intellect", Report No. 26.10.82.365, University of Amsterdam, 1982.

Stern, A., "Foundation of the Intelligence Code", Report No. 29.11.82.375, University of Amsterdam, 1982.

Stern, A. and V. Stern, "An Intelligent Computing System", Report 8406/I (Econometric Institute, Erasmus University Rotterdam), 1984.

Zadeh, L.A., "Fuzzy sets", Information and Control, Vol. 8, No. 3, pp. 338—353, 1965.

**Claims**

1. An elementary component-cell of a system for storage and/or processing of information in numerical and/or symbolic forms comprising n independent positions (4) and a plurality of inputs (8—10) for common control of and energy supply (11) to said positions, wherein each position comprises a channel input (2) for a K-nary code flow, where $K \geq 2$, a Q-nary memory element (5), where $Q \geq 2$ and $K \geq Q$, a channel output (3) for a K-nary code flow, a first K-nary logic switch means (SA) having its input connected to said channel input and its output to an input of said Q-nary memory element, and a second K-nary logic switch means (SE) having an input connected to an output of said Q-nary memory element, and an output connected to said channel output,

(A) wherein a unified processor-memory functioning of an elementary component-cell is defined by successive processes of absorption of said K-nary code flow from said channel input (2) and emission of said K-nary code flow to said channel output (3),

(B) with the ability to selectively conserve a unit of information in the short-term (S-)mode or in the long-term (L-)mode, where the said S-mode conserving a unit of information in the form of a n-code word $a_k$ and the said L-mode conserving the same unit of information in the form of the complementary n-code word $\bar{a}_k$, where $a_k$ and $\bar{a}_k$ belong to the same $[(m_1, m_2, \ldots, m_i, \ldots, m_{Q-1})$-out-of-n] code and $m_i$ being the number of the position occupied by the i-th character of a Q-nary alphabet, where $m_i = n/Q$, and the ability to convert

a) from S- to L-mode by internal or external means and

b) from L- to S-mode by external means only, where "external" and "internal" mean with respect to the elementary component-cell,

(C) wherein the said second K-nary logic switch means (SE) comprises W feedback inputs (7), where $W = K—Q$, for connection to the outputs of Q-nary memory elements at the corresponding position in W subsequent elementary component-cells along the computational trajectory,

(D) wherein the said first K-nary logic switch means evaluating a K-nary code information unit from said input channel and causing a K-nary logical proposition comprising the evaluated K-nary code information unit and the state of the associated Q-nary memory element at the corresponding position to select a unique state of the associated Q-nary memory element at the corresponding position according to a first logical table defining absorption,

(E) wherein the said second K-nary logic switch means assigning a unique K-nary code information unit for the said output channel according to a second logical table defining emission with respect to the state and to the mode of the associated Q-nary memory element at the corresponding position and to W states of feedback output from Q-nary memory elements at corresponding positions in W subsequent elementary component-cells,

(F) wherein the said feedback input insures preservation of the said $[(m_1, m_2, \ldots, m_i, \ldots, m_{Q-1})$-out-of-n]-code for n-codewords presented in parallel,

(G) wherein the elementary component-cell can be controlled by changing two-passive, stand-by- out of three -passive, stand-by, active- processing modes by a first common control signal (8), namely from a 'passive' processing mode to a 'stand-by' processing mode and from a 'stand-by' processing mode to a 'passive' processing mode, wherein said modes being a 'passive' processing mode preserving the actual state of each elementary component-cell, and a 'stand-by' processing mode enabling to perform the processing function by a transition from the 'stand-by' processing mode to the 'active' processing mode as result of absorption and by a transition from the 'active' processing mode, to the 'stand-by' processing mode to perform the processing and the storage functions if in L-mode, and the storage function only if in S-mode, as a result of emission, said 'passive' processing mode enabling free passage of K-nary information units from the said input channel and of W feedback outputs from Q-nary memory elements at the corresponding position in W subsequent elementary component-cells from the said output channel along the first K-nary logic switch means, the Q-nary memory element and the second K-nary logic switch means, as an operational selection option and as a reliability precaution measure,

(H) wherein the K-nary logic over a Q-nary alphabet or K over Q-logic being defined by:

— a. K truth values and

— b. the storage of the result of the evaluation of a K-nary logical proposition in a Q-nary form, according to a probabilistic rule, (I) wherein a Q-nary logical relaxation can be attained by restricting to Q out of K balanced truth values.

2. An elementary component-cell according to claim 1, wherein: $K = 3$, $Q = 2$ and $W = 1$.

3. A elementary component-cell according to claim 1, wherein: $K = 2$, $Q = 2$ and $W = 0$.

4. An elementary component-cell according to claims 1, 2 or 3, wherein an internal clock means (not shown) comprises an accumulator timing means generating an internal common control signal at a point of time indicating total time in 'stand-by' and 'active' processing modes equalling a predetermined time interval $\triangle T$, said internal common signal commanding conversion from S- to L- memory mode by means of variable $\mu$, wherein the said first common control signal (8) controls indirectly by means of variable R the conversion of the said memory modes from S- to L-, frequency selective, the second common control signals (9,10) control by means of a variable f(q) conversions of the said memory modes from S- to L- and from L- to S-, selectively in accordance with address and/or current processing mode.

5. An elementary component-system wherein said elementary component-cells according to claims 1, 2, 3, or 4 are interconnected in a finite network for storage and/or processing of information in numerical, K = Q, and/or symbolic, K > Q, forms, wherein the said network is described by an (N×M)-matrix A, N<M, where $a_{ij}$ — being a said elementary component-cell of type a, wherein said interconnections of said network are organized in accordance with the rule

$$a_{ij} \rightarrow a_{i \oplus_N 1, j \oplus_M 1},$$

where the operations $\oplus_N$ and $\oplus_M$ being defined as an operation addition modulo N or M, respectively, for i = 0, N—1; and j = 0, M—1, such that said network can realize T parallel computing processes, where T ≥ 1, with possibility of identifying I/O with any elementary component-cell, if T=1, or with any column of elementary component-cells, if T>1, where the T is the highest common factor of each given pair N and M.

6. An elementary component-system according to claim 5, wherein the elementary component-cells of said (N×M)-matrix of the first row are identified with the elementary components of the last row and the elementary components of the first columns are identified with those of the last column, such that said network has a Möbius type of closed topology.

7. An elementary component-system according to claims 5 or 6, wherein elementary component-cells of type A are degenerated into component-cells of type b to be arranged to prevent routing of information in two orthogonal directions through homogeneous network.

8. An elementary component-system according to claims 5 or 6, wherein elementary component-cells of type A are degenerated into component-cells of type c to be inserted for control purposes and to be arranged to provide dynamic switching between parallel and sequential processing.

**Patentansprüche**

1. Elementrakomponentenzelle eines Systems zum Speichern und/oder Verarbeiten von Informationen in numerischen und/oder symbolischen Formen, die n unabhängige Positionen (4) und eine Vielzahl von Eingängen (8—10) zur gemeinsamen Steuerung von und Energiezufuhr (11) zu den Positionen aufweist, worin jede Position einen Kanaleingang (2) für einen K-nären Codefluß, wobei K ≥ 2, ein Q-näres Speicherelement (5), wobei Q ≥ 2 und K ≥ Q, einen Kanalausgang (3) für einen K-nären Codefluß, eine erste K-näre logische Schalteinrichtung (SA), die ihren Eingang mit dem Kanaleingang und ihren Ausgang mit einem Eingang des Q-nären Speicherelements verbunden hat, und eine zweite K-näre logische Schalteinrichtung (SE), die einen Eingang mit einem Ausgang des Q-nären Speicherelements verbunden hat, und einen Ausgang, der mit dem Kanalausgang verbunden ist, aufweist,

(A) worin ein vereinigtes Prozessor-Speicher-Funktionieren einer Elementarkomponentenzelle definiert ist durch aufeinanderfolgende Prozesse von Absorption des K-nären Codeflusses von dem Kanaleingang (2) und Emission des K-nären Codeflusses zu dem Kanalausgang (3),

(B) mit der Fähigkeit, wahlweise eine Informationseinheit in der Kurz-Term (S-)Betriebsweise oder in der Lang-Term (L-)Betriebsweise zu bewahren, worin die S-Betriebsweise eine Informationseinheit in der Form eines n-Codewortes $a_k$ bewahrt und die L-Betriebsweise dieselbe Informationseinheit in der Form des komplementären n-Codewortes $\bar{a}_k$ bewahrt, worin $a_k$ und $\bar{a}_k$ zu dem selben [($m_1$, $m_2$, . . ., $m_i$, . . ., $m_{Q-1}$)-aus-n]-Code gehören und $m_i$ die Nummer der Position ist, die durch den i-ten Buchstaben eines Q-nären Alphabets besetzt ist, worin $m_i$ = n/Q ist, und der Fähigkeit, umzuwandeln

a) von der S- zu der L-Betriebsweise durch interne oder externe Einrichtungen und

b) von der L- zu der S-Betriebsweise nur durch externe Einrichtungen,

worin "extern" und "intern" mit Bezug auf die Elementarkomponentenzelle bedeutet,

(C) worin die zweite K-näre logische Schalteinrichtung (SE) W Rückkopplungseingänge (7) aufweist, worin W = K—Q ist, zur Verbindung mit den Ausgängen von Q-nären Speicherelementen bei der entsprechenden Position in W nachfolgenden Elementarkomponentzellen entlang der Berechnungstrajektorie,

(D) worin die erste K-näre logische Schalteinrichtung eine K-näre Codeinformationseinheit von dem Eingangskanal auswertet und eine K-näre logische Aussage bewirkt, die die ausgewertete K-näre Codeinformationseinheit und den Zustand des zugeordneten Q-nären Speicherelements bei der Entsprechenden Position aufweist, um einen eindeutigen Zustand des zugeordneten Q-nären Speicherelements bei der entsprechenden Position auszuwählen entsprechend einer ersten logischen Tabelle, die Absorption definiert,

(E) worin die zweite Q-näre logische Schalteinrichtung eine eindeutige K-näre Codeinformationseinheit für den Ausgangskanal entsprechend einer zweiten logischen Tabelle zuweist, die Emission definiert unter Bezug auf den Zustand und die Betriebsweise des zugeordneten Q-nären Speicherelements bei der entsprechenden Position und auf W-Zustände eines Rükkopplungsausgangs von Q-nären Speicherelementen bei entsprechenden Positionen in W nachfolgenden Elementarkomponentenzellen,

(F) worin der Rückkopplungseingang die Bewahrung der [($m_1$, $m_2$, . . ., $m_i$, . . ., $m_{Q-1}$)-aus n] -Codes für parallel dargestellte n-Codeworte sicherstellt,

(G) worin die Elementarkomponentenzelle gesteuert werden kann durch Verändern von zwei-passiv-,

Bereitschaft-aus-drei-passiv, Bereitschaft-, Aktiv-Verarbeitungs-Betriebsweisen durch ein erstes gemeinsames Steuersignal (8), nämlich von einer "passiven" Verarbeitungsbetriebsweise in eine "Bereitschafts-" Verarbeitungs-Betriebsweise und von einer "Bereitschafts-" Verarbeitungs-Betriebsweise in eine "passive" Verarbeitungs-Betriebsweise, worin die Betriebsweisen eine "passive" Verarbeitungs-Betriebsweise, die den tatsächlichen Zustand jeder Elementarkomponentenzelle bewahrt und eine "Bereitschafts-" Verarbeitungs-Betriebsweise sind, die ermöglicht, die Verarbeitungsfunktion durchzuführen durch einen Übergang von der "Bereitschafts-" Verarbeitungs-Betriebsweise zu der "aktiven" Verarbeitungs-Betriebsweise als ein Ergebnis der Absorption und durch einen Übergang von der "aktiven" Verarbeitungs-Betriebsweise zu der "Bereitschafts-" Verarbeitungs-Betriebsweise, um die Verarbeitungs- und Speicherfunktionen durchzuführen, falls in L-Betriebsweise, und nur die Speicherfunktion, falls in S-Betriebsweise, als ein Ergebnis der Emission, wobei die "passive" Verarbeitungs-Betriebsweise einen freien Durchgang von K-nären Informationseinheiten von dem Eingangskanal und W Rückkopplungsausgängen von Q-nären Speicherelementen bei der entsprechenden Position in W nachfolgenden Elementarkomponentenzellen von dem Ausgangskanal entlang der ersten K-nären logischen Schalteinrichtung, dem Q-nären Speicherelement und der zweiten K-nären logischen Schalteinrichtung ermöglicht als eine Betriebsaus-wahloption und als eine Zuverlässigkeits-Vorsichtsmaßnahme,

(H) worin die K-näre Logik über ein Q-näres Alphabet oder K über Q-Logik definiert ist durch

— a. K Wahrheitswerte und

— b. die Speicherung des Ergebnisses der Auswertung einer K-nären logischen Aussage in einer Q-nären Form entsprechend einer Wahrscheinlichkeitsregel,

(I) worin eine Q-näre logische Relaxation erhalten werden kann durch Beschränkung auf Q-aus-K symmetrische Wahrheitswerte.

2. Elementarkomponentenzelle nach Anspruch 1, worin: K = 3, Q = 2 und W = 1.

3. Elementarkomponentenzelle nach Anspruch 1, worin: K = 2, Q = 2 und W = 0.

4. Elementarkomponentenzelle nach Ansprüchen 1, 2 oder 3, worin eine interne Takteinrichtung (nicht gezeigt) eine Speicherzeitgebereinrichtung aufweist, die ein gemeinsames internes Steuersignal bei einem Zeitpunkt erzeugt, der die Gesamtzeit in "Bereitschafts-" und "aktiven" Verarbeitungs-Betriebsweisen anzeigt, die einem vorbestimmten Zeitintervall $\Delta$ T gleich sind, wobei das gemeinsame interne Signal die Umwandlung von S- zu L-Speicher-Betriebsweise mit Hilfe einer Variablen $\mu$ befiehlt, worin das erste gemeinsame Steuersignal (8) mit Hilfe einer Variablen R indirekt die Umwandlung der Speicherbetriebsweisen von S- zu L- steuert, die zweiten gemein-samen Steuersignale (9, 10) frequenzselektiv mit Hilfe einer Varibalen f(q) Umwandlungen der Speicherbetriebsweisen von S- zu L- und von L- zu S- selektiv in Übereinstimmung mit Adressen und/oder einer Stromverarbeitungs-Betriebsweise steuern.

5. Elementarkomponentensystem, worin die Elementarkomponentenzellen nach Ansprüchen 1, 2, 3 oder 4 untereinander in einen finiten Netzwerk Verbunden sind, zum Speichern und/oder Verarbeiten von Information in numerischen, K = Q, und/oder symbolischen, K > Q, Formen, worin das Netzwerk beschrieben wird durch eine (N × M)-Matrix, A, N < M, worin $a_{ij}$ eine solche Elementarkomponentenzelle von Typ a ist, worin die Verbindungen des Netzwerks organisiert sind in Übereinstimmung mit der Regel

$$a_{ij} \rightarrow a_{i \overset{N}{\oplus} 1, j \overset{M}{\oplus} 1},$$

worin die Operationen $\overset{N}{\oplus}$ und $\overset{M}{\oplus}$ definiert sind, als eine Operation Addition modulo N bzw. M für i = 0 N-1; und j = 0, M-1, so, daß das Netzwerk T parallele Berechnungsprozesse realisieren kann, worin T > 1, mit der Möglichkeit des Identifizierens von I/O mit jeder Elementarkomponentenzelle, falls T = 1, oder mit irgend einer Spalte von Elementarkomponentenzellen, falls T > 1, worin T der größte gemeinsame Teiler eines jeden gegebenen Paares N und M ist.

6. Elementarkomponentensystem nach Anspruch 5, worin die Elementarkomponentenzelle der (N × M)-Matrix der ersten Reihe gleichgesetzt sind mit den Elementarkomponenten der letzten Reihe und die Elementarkomponenten der ersten Spalten gleichgesetzt sind mit denen der letzten Spalte, so daß das Netzwerk einen Möbius-Typ von geschlossener Topologie hat.

7. Elementarkomponentensystem nach Ansprüchen 5 oder 6, worin Elementarkomponentenzellen des Typs A degeneriert sind in Komponentenzellen von Typ b um angeordnet zu werden, um Senden von Information in zwei orthogonalen Richtungen durch das homogene Netzwerk zu verhindern.

8. Elementarkomponentensystem nach Ansprüchen 5 oder 6, worin Elementarkomponentenzellen vom Typ A degeneriert sind in Komponentenzellen von Typ c, um für Steuerzwecke eingefügt zu werden, und um so angeordnet zu werden, um dynamisches Schalten zwischen paralleler und sequentieller Verarbeitung vorzusehen.

**Revendications**

1. Une cellule de composant élémentaire d'un système prévu pour l'enregistrement et/ou le traitement d'information sous des formes numériques et/ou symboliques, comprenant n positions indépendantes (4) et un ensemble d'entrées (8—10) pour la commande commune de ces positions et pour leur alimentation

en énergie, dans lequel chaque position comprend un canal d'entrée (2) pour un flux de codes binaires K-aires, avec K ≥ 2, un élément de mémoire Q-aire (5), avec Q ≥ 2 et K ≥ Q, un canal de sortie (3) pour un flux de codes K-aires, un premier dispositif de commutation logique K-aire (SA) dont l'entrée est connectée au canal d'entrée et la sortie est connectée à une entrée de l'élément de mémoire Q-aire, et un second dispositif de commutation logique K-aire (SE) ayant une entrée connectée à une sortie de l'élément de mémoire Q-aire, et une sortie connectée au canal de sortie,

(A) dans laquelle une fonction processeur-mémoire unifiée d'une cellule de composant élémentaire est définie par des traitements successifs d'absorption du flux de codes K-aires à partir du canal d'entrée (2) et d'émission du flux de codes K-aires vers le canal de sortie (3),

(B) la cellule est capable de conserver sélectivement une unité d'information dans le mode de court terme (S) ou dans le mode de long terme (L), le mode S conservant une unité d'information sous la forme d'un mot de code de longueur n, $a_k$, et le mode L conservant la même unité d'information sous la forme du mot de code de longueur n complémentaire $\overline{a}_k$, les mots $a_k$ et $\overline{a}_k$ appartenant au même code [($m_1$, $m_2$, . . . , $m_i$, . . . , $m_{Q-1}$) parmi n] et $m_i$ étant le numéro de la position occupée par le caractère de rang i d'un alphabet Q-aire, avec $m_i$ = n/Q, et elle est capable d'effectuer une conversion

a) du mode S au mode L, par des moyens internes ou externes, et

b) du mode L au mode S, par des moyens externes seulement,

les termes "externes" et "internes" se rapportant à la cellule de composant élémentaire,

(C) dans laquelle le second dispositif de commutation logique K-aire (SE) comprend W entrées de réaction (7), avec W = K-Q, prévues pour la connexion aux sorties d'éléments de mémoire Q-aires, à la position correspondante, dans W cellules de composants élémentaires suivantes le long de la trajectoire de calcul,

(D) dans laquelle le premier dispositif de commutation logique K-aire évalue une unité d'information en code K-aire provenant du canal d'entrée et il fait en sorte qu'une proposition logique K-aire comprenant l'unité d'information en code K-aire évaluée et l'état de l'élément de mémoire Q-aire associé, à la position correspondante, sélectionne un état particulier de l'élément de mémoire Q-aire associé, à la position correspondante, conformément à une première table logique définissant une absorption,

(E) dans laquelle le second dispositif de commutation logique K-aire affecte une unité d'information en code K-aire particulière pour le canal de sortie, conformément à une seconde table logique définissant une émission, par rapport à l'état et au mode de l'élément de mémoire Q-aire associé, à la position correspondante, et à W états de sortie de réaction provenant d'éléments de mémoire K-aires à des positions correspondantes dans W cellules de composants élémentaires suivantes,

(F) dans laquelle l'entrée de réaction assure la préservation du code [($m_1$, $m_2$, . . . , $m_i$, . . . , $m_{Q-1}$) parmi n] pour des mots de code de longueur n présentées en parallèle,

(G) dans laquelle la cellule de composant élémentaire peut être commandée par la changement de deux modes, à savoir le mode passif et le mode d'attente, parmi trois modes de traitement, à savior le mode passif, le mode d'attente et le mode actif, par un premier signal de commande commun (8), c'est-à-dire par un changement faisant passer d'un mode de traitement "passif" à un mode de traitement "d'attente", et d'un mode de traitement "d'attente" à un mode de traitement "passif" ces modes consistant en un mode de traitement "passif" qui préserve l'état actuel de chaque cellule de composant élémentaire, et en un mode de traitement "d'attente" qui autorise l'accopmplissement de la fonction de traitement par une transition du mode de traitement "d'attente" vers le mode de traitement "actif", sous l'effet d'une absorption, et par une transition du mode de traitement "actif" vers le mode de traitement "d'attente" pour l'accomplissement des fonctions de traitement et d'enregistrement si la cellule est dans le mode L, et de la fonction d'enregistrement seulement si elle est dans le mode S, sous l'effet d'une émission, le mode de traitement "passif" autorisant un libre passage d'unités d'information K-aires à partir du canal d'entrée et de W signaux de sortie de réaction à partir d'éléments de mémoire Q-aires, à la position corespondante dans W cellules de composants élémentaires suivantes, à partir du canal de sortie, par l'intermédiaire du premier dipositif de commutation logique K-aire, de l'élément de mémoire Q-aire et du second dispositif de commutation logique K-aire, à titre d'option de sélection opérationnelle et à titre de mesure de précaution pour la fiabilité,

(H) dans laquelle la logique K-aire sur un alphabet Q-aire, ou logique K sur Q, est définie par:

a. K valeurs logiques, et

b. L'enregistrement du résultat de l'évaluation d'une proposition logique K-aire sous une forme Q-aire, conformément à une régle probabiliste,

(I) dans laquelle on peut atteindre une relaxation logique Q-aire par une restriction à Q valeurs logiques équilibrées parmi K.

2. Une cellule de composant élémentaire selon la revendication 1, dans laquelle: K = 3, Q = 2 et W = 1.

3. Une cellule de composant élémentaire selon la revendication 1, dans laquelle: K = 2, Q = 2 et W = 0.

4. Une cellule de composant élémentaire selon les revendications 1, 2 ou 3, dans laquelle des moyens d'horloge internes (non représentés) comprennent des moyens de mesure de temps à accumulateur qui engendrent un signal de commande commun interne à un instant qui indique qu'une durée totale dans les modes de traitement "d'attente" et "actif" est égale à un intervalle de temps prédéterminé ΔT, ce signal commun interne commandant la conversion du mode de mémoire S en mode L, au moyen d'une variable μ, dans laquelle le premier signal de commande commun (8) commande indirectement, au moyen d'une

variable R, la conversion des modes de mémoire de S en L, avec sélectivité de fréquence, les seconds signaux de commande communs (9, 10) commandent au moyen d'une variable f(q) des conversions de mode de mémoire de S en L, et de L en S, de façon sélective, conformément à une adresse et/ou un mode de traitement courant.

5. Un système de composants élémentaires dans lequel les cellules de composants élémentaires conformes aux revendications 1, 2, 3, ou 4 sont interconnectées en un réseau fini vue de l'enregistrement et/ou du traitement d'information sous forme numérique, avec K = Q, et/ou sous forme symbolique, avec K > Q, dans lequel ce réseau est décrit par une matrice A de dimensions (N × M), avec N < M, l'élément $a_{ij}$ étant une cellule de composant élémentaire de type a, dans lequel les interconnexions du réseau sont organisées conformément à la régle:

$$a_{ij} \rightarrow a_{i \overset{N}{\oplus} 1, j \overset{M}{\oplus} 1},$$

dans laquelle les opérations $\overset{N}{\oplus}$ et $\overset{M}{\oplus}$ sont définies comme une opération d'addition modulo N ou M, respectivement, pour i = 0, N-1; et J = 0, M-1, de façon que ce réseau puisse accomplir T traitements de calcul parallèles avec T > 1, avec possibilité d'identifier l'Entrée/Sortie à une cellule de composant élémentaire quelconque, si T=1, ou à une colonne quelconque de cellules de composants élémentaires, si T > 1, le terme T étant le plus grand facteur commun de chaque paire N et M donnée.

6. Un système de composants élémentaires selon la revendication 5, dans lequel les cellules de composants élémentaires de la première ligne de la matrice (N × M) sont identifiées aux composants élémentaires de la dernière ligne, et les composants élémentaires de la première colonne sont identifiés à ceux de la dernière colonne, de façon qu le réseau ait une topologie fermée du type de Möbius.

7. Une système de composants élémentaires selon les revendications 5 ou 6, dans lequel des cellules de composants élémentaires de type A sont dégénérées en cellules de composants de type b de façon à être disposées pour empêcher le routage de l'information dans deux directions orthogonales dans un réseau homogène.

8. Un système de composants élémentaires selon les revendications 5 ou 6, dans lequel des cellules de composants élémentaires de type A sont dégénérées en cellules de composants de type c, pour être introduites dans un but de commande et pour être disposées de façon à réaliser une commutation dynamique entre un traitement parallèle et un traitement séquentiel.

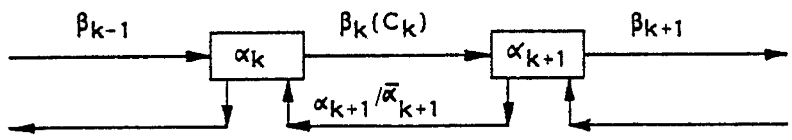


Figure 1.

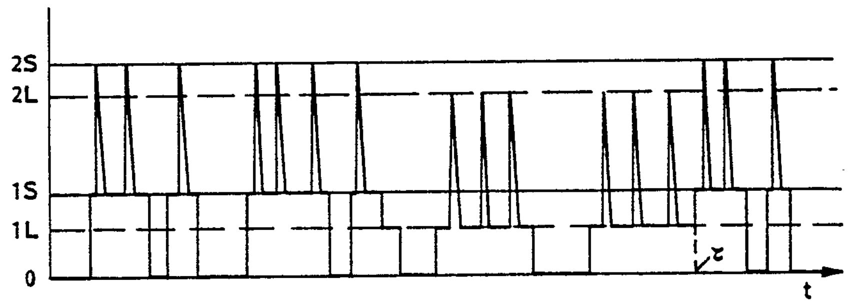


Figure 2.

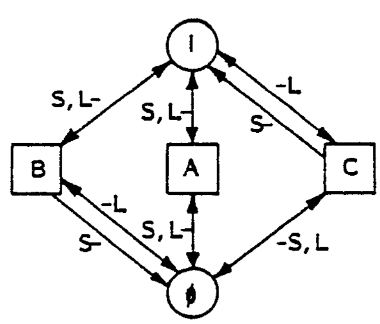


Figure 3.

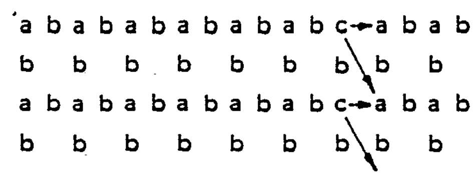


Figure 4.

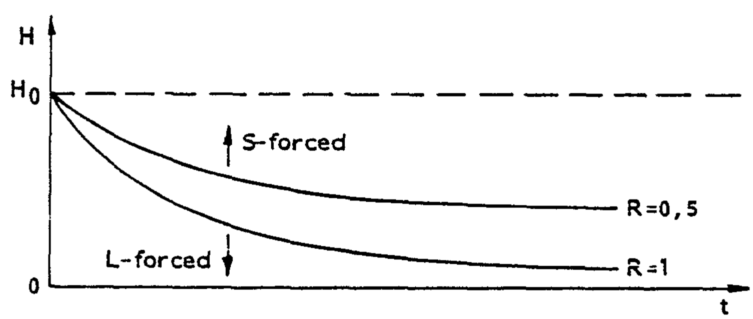


Figure 5.

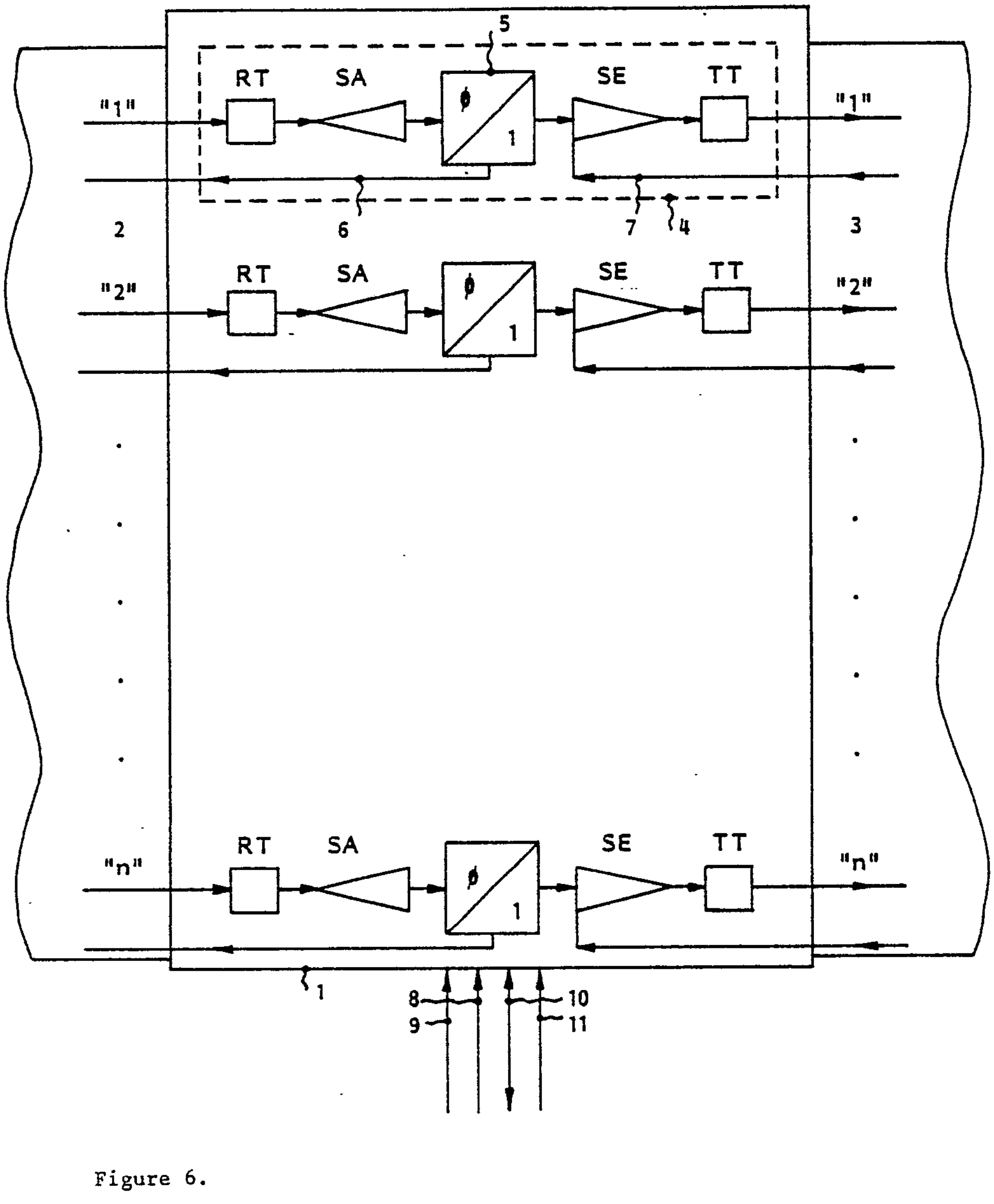


Figure 6.

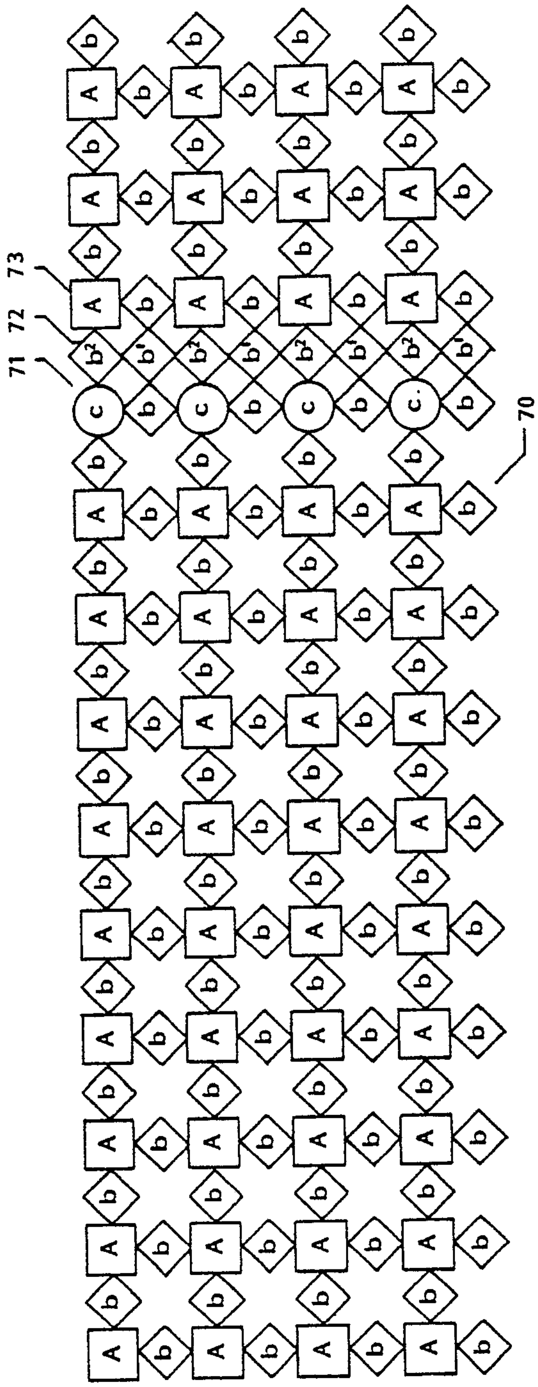


Figure 7.

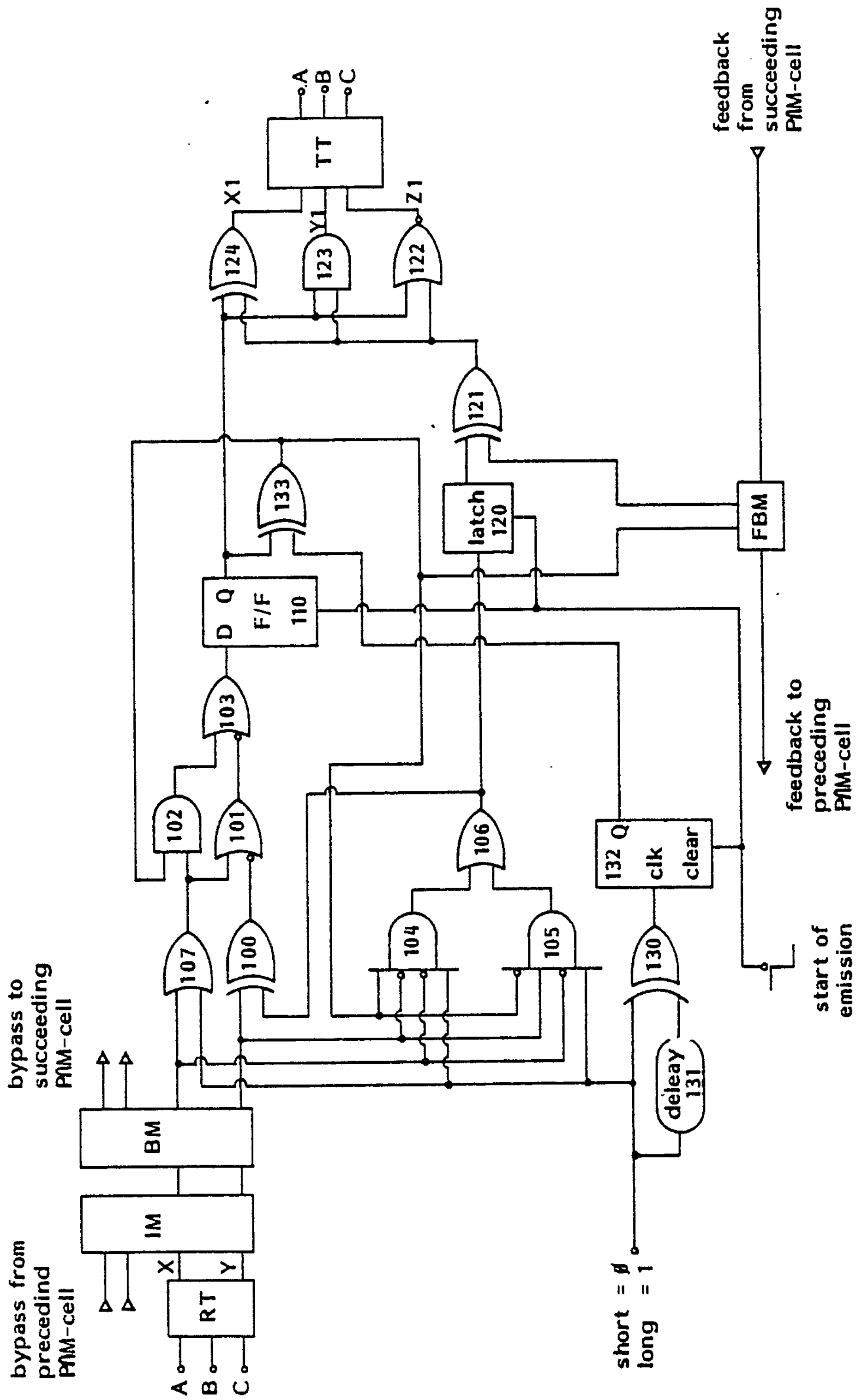
bypass from precedind PAM-cell
bypass to succeeding PAM-cell
feedback from succeeding PAM-cell
feedback to preceding PAM-cell
start of emission
short = ∅
long = 1
A
B
C
X
Y
RT
IM
BM
TT
X1
Y1
Z1
FBM
latch 120
D Q F/F 110
132 Q clk clear
deleay 131
100
101
102
103
104
105
106
107
121
122
123
124
130
133

Figure 8.

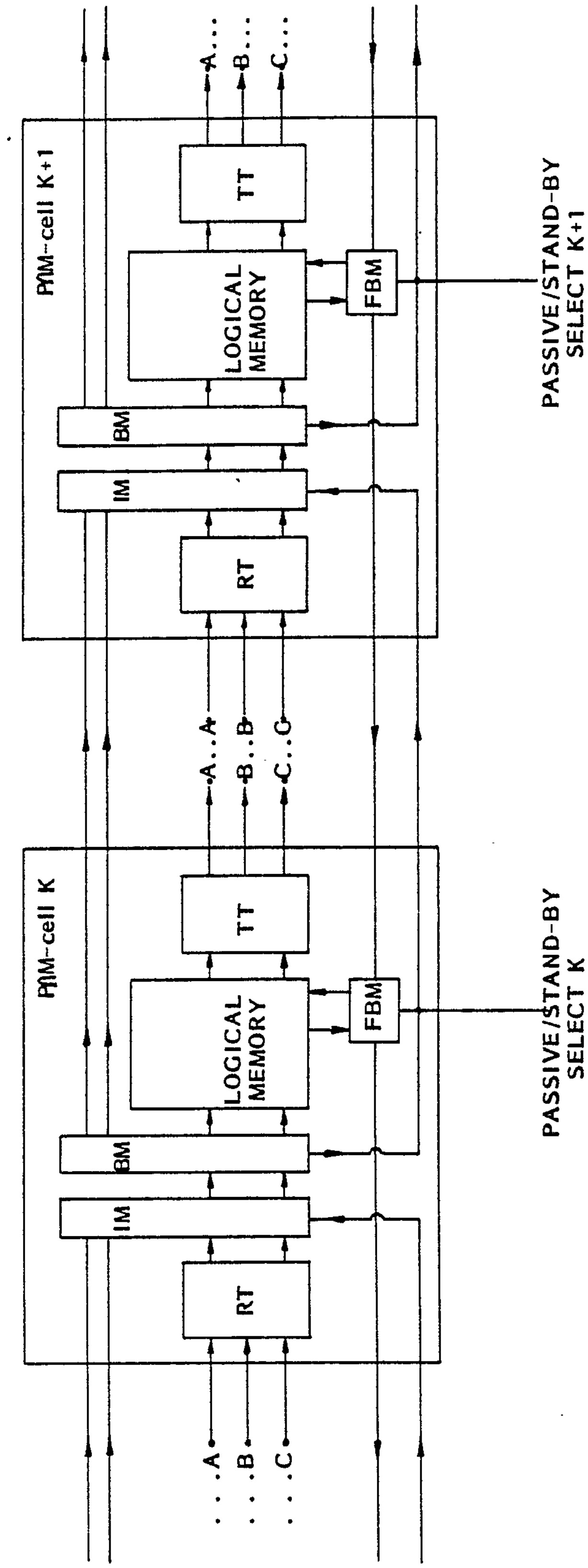
PMM-cell K+1
TT
LOGICAL MEMORY
FBM
BM
IM
RT
PASSIVE/STAND-BY SELECT K+1
A...
B...
C...
A..A
B..B
C..C
PMM-cell K
TT
LOGICAL MEMORY
FBM
BM
IM
RT
PASSIVE/STAND-BY SELECT K
...A
...B
...C

Figure 9.

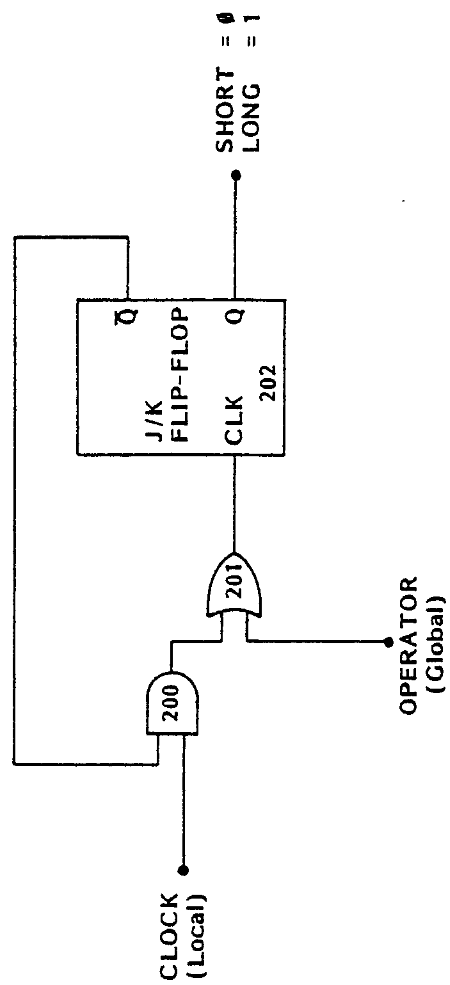
SHORT = 0
LONG = 1
Q̄
Q
J/K
FLIP-FLOP
CLK
202
201
200
OPERATOR
(Global)
CLOCK
(Local)

Figure 10.